(19) Europäisches Patentamt
European Patent Office
Office européen des brevets

(11) EP 2 736 230 A1

(12) EUROPEAN PATENT APPLICATION

(43) Date of publication:
28.05.2014 Bulletin 2014/22

(51) Int Cl.:
$H04M\ 1/725$ (2006.01)

(21) Application number: 12306455.2

(22) Date of filing: 22.11.2012

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(71) Applicant: NEC Corporation
Minato-ku,
Tokyo 108-8001 (JP)

(72) Inventors:
• Beaugrand, Fabrice
92500 Rueil Malmaison (FR)
• Zappulla, Fabrice
95600 Eaubonne (FR)

(74) Representative: Cabinet Plasseraud
52, rue de la Victoire
75440 Paris Cedex 09 (FR)

(54) Direct wireless connection between two terminals

(57) The invention aims a method for connecting at least a first communication device (T1) and a second communication device (T2) via a wireless link, the method comprising the steps performed in the first communication device:
- initiating a local wireless network and activating a user interface to enter identification data related to said wireless network,
- upon reception of a connection request (REQ) from the second communication device, said communication request comprising identification data for using said network, checking a validity of the identification data received in the connection request by a comparison with the identification data related to the wireless network, and if the validity is checked, establishing a connection with the second communication device.

In the invention, the aforesaid user interface comprises at least one movement sensing unit (MS, GS), and, upon a movement performed by a user of the first communication device (A1, A2), the sensing unit generates a user signal which is interpreted and converted into the identification data related to the wireless network (SSID).

FIG. 1

**Description**

The present invention relates to a connection between at least two communication devices, such as terminals (e.g. mobile phones, Smartphones, tablets, etc.).

The invention finds suitable applications for example for establishing a direct connection between such terminals, for example through a direct wireless link (such as a Wifi communication, or Bluetooth, or NFC (for "Near Field Contact"), etc.), like discussed hereafter.

For example, in the standard IEEE-802.11 (for a wireless local network), a basic service set (BSS) is a basic building block of a wireless local area network (LAN). In such an infrastructure, usually, a single access point together with all associated stations (client devices) is called a BSS. Usually, an access point acts as a master to control the stations within that BSS. The simplest BSS consists on one access point and one station. In an ad-hoc mode, a set of synchronized stations (one of which acts as a master) forms a BSS. In the standard 802.11, it is possible also to create an ad-hoc network of client devices, without a controlling access point, so as to obtain a system called an "independent basic service set" (IBSS).

Each BSS is uniquely identified by a so-called "basic service set identification" (BSSID). For a BSS operating in infrastructure mode, the BSSID is the MAC address of the wireless access point (WAP). For an IBSS, the BSSID is a locally administered MAC address usually generated from a random number.

An extended service set (ESS) is a set of one or more interconnected BSSs and integrated local area networks that appear as a single BSS to a logical link control layer at any station associated with one of those BSSs.

Each ESS is identified by a service set identifier (SSID). For an IBSS, the SSID is chosen by the client device that starts the network, and broadcasting of the SSID is performed by all devices that are members of the network.

Therefore, in an example, for connecting two devices according to the 802.11 standard, a validation of an identifier (SSID or BSSID) entered by a user is necessary.

More generally, in order to connect directly two terminals while using a radiofrequency link, each user of a terminal usually needs to:

-    know an identifier (ID) and a password of the other terminal,

-    search the ID (SSID) in a list,

-    enter manually a password using a screen and a keyboard.

Such an operation needs several actions from the user and usually takes one or two minutes.

The present invention aims to improve the situation.

The invention proposes therefore a method for connecting at least a first communication device and a second communication device via a wireless link, the method comprising the steps performed in said first communication device:

-    initiating a local wireless network and activating a user interface to enter identification data related to said wireless network,

-    upon reception of a connection request from the second communication device, said communication request comprising identification data for using said network, checking a validity of the identification data received in the connection request by a comparison with said identification data related to the wireless network, and if the validity is checked, establishing a connection with the second communication device,

wherein said user interface comprises at least one movement sensing unit, and,
upon a movement performed by a user of said first communication device, the sensing unit generates a user signal, said user signal being interpreted and converted into said identification data related to said wireless network.

In an embodiment, the movement sensed by the sensing unit causes a generation of identification data comprising at least an identifier of said wireless network (for example an SSID in the IEEE 802.11 standard).

The generated identification data can include further a first password while the identification data comprised in the communication request includes a second password, and the validity checking step advantageously comprises a comparison between the first and second passwords.

In an example of implementation, the first password can be calculated on the basis of a signature function of the identifier.

The invention as presented above aims thus at a method to initiate the network. Symmetrically, the invention aims also at a method to be connected to a wireless network.

Therefore, according to another aspect of the invention, the invention aims also at a method for connecting at least a first communication device to a second communication device via a wireless link, the method comprising the steps performed in said second communication device to enter a local wireless network initiated by the first communication device:

- activating a user interface to enter identification data related to the local wireless network, and
- sending a connection request including said identification data to the first communication device to establish a connection with said first communication device,

wherein said user interface comprises at least one movement sensing unit, and,
upon a predetermined movement performed by a user of said second communication device, the sensing unit generates a user signal,
said user signal being interpreted and converted into said identification data related to said wireless network.

In an embodiment, the predetermined movement sensed by the sensing unit causes a generation of identification data comprising at least an identifier value, said identifier value being compared to an identifier of the wireless network, and advantageously the connection request is sent if the identifier value matches with the network identifier.

In a possible embodiment, the generated identification data comprises further a password which is included in the communication request.

In example of implementation, the password is calculated on the basis of a signature function of the identifier value.

The invention aims also at a method combining the method performed by a first communication device for initiating a network and the method for connecting a second communication device to that network and wherein the first and second communication devices comprises similar movement sensing unit, and the predetermined movement performed by a user of said second communication device to send said connection request corresponds to the movement performed by a user of the first communication device to initiate the network.

In an example of implementation, the wireless link can be established according to the IEEE 802.11 standard, and the aforesaid identifier of the wireless network is a "service set identifier" (for "SSID").

In a possible embodiment, the movement sensing unit of said first and/or second communication devices comprises a magnetic sensor to determine an orientation with respect to north, and the aforesaid predetermined movement corresponds to orienting the communication device within a predetermined orientation range with respect to north.

In a same or alternative embodiment, the movement sensing unit of the first and/or second communication devices comprises a gravity sensor to determine an inclination of the communication device with respect to a vertical direction, and the aforesaid predetermined movement corresponds to inclining the communication device within a predetermined angle range relatively to the vertical direction.

For example, the aforesaid predetermined movement can correspond to a predetermined combination of several movements.

The present invention aims also at a computer program product, comprising instructions for performing the method (performed in the network initiating device or in the device to connect to the network), when run by a processor.

More particularly, the aforesaid computer program product can comprise instructions for interpreting and converting the user signal into at least identification data related to the wireless network, and for comparing such identification data to a reference.

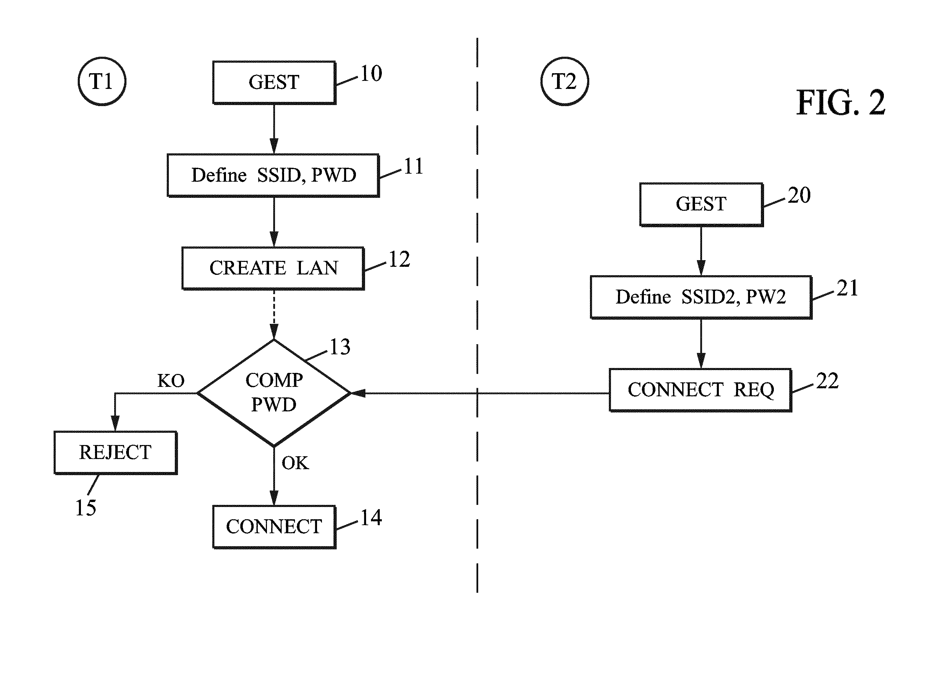

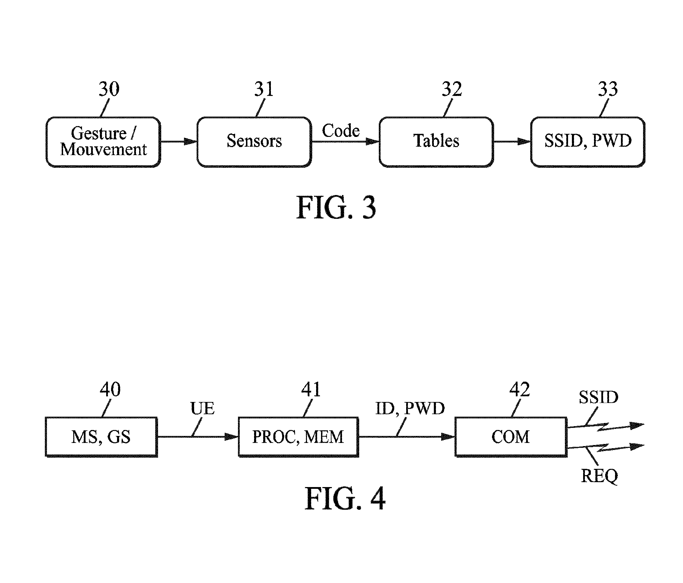

Examples of algorithmic flow charts of such a program are given in Figures 2 and 3 detailed below.

The invention aims also at a communication device for performing the method (of initiating the network or to be connected to a network) and comprising at least:

- a movement sensing unit generating a user signal,
- a processing unit for interpreting and converting the user signal into at least identification data related to the wireless network, and for comparing said identification data to a reference, and
- a communication interface controlled by the checking unit for, in case of validity of said comparison, establishing a wireless connection with at least one other communication device and/or for sending a wireless connection request to another communication device.

Therefore, thanks to the implementation of the invention in a general way, the time taken for the connection operation and the number of actions, to promote a better user experience when connecting two communication devices via a wireless link, are highly reduced. There is:

- no need for the users to know the network identifier and password,

- no need to search the ID in any list and select it,

- no need to enter the password manually.

The present invention is illustrated by way of example, and not by way of limitation, in the figures of the accompanying drawings, in which like reference numerals refer to similar elements and in which:

- Figure 1 shows schematically two communication devices initiating a direct wireless communication link;

- Figure 2 shows schematically steps performed by each of the two devices to establish the wireless communication link;

- Figure 3 shows an embodiment of steps performed to convert a user signal generated by sensing a movement, into an identifier related to a wireless network and a password;

- Figure 4 shows schematically modules of a communication device in an embodiment of the invention.

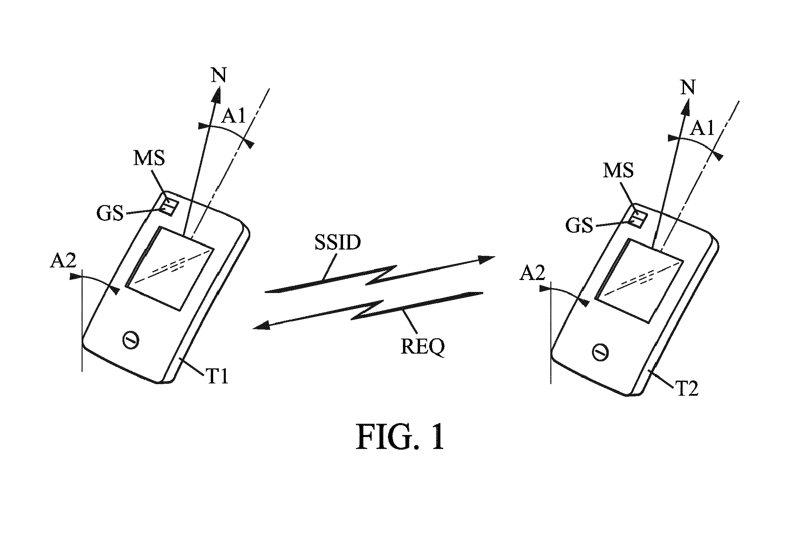

Referring to Figure 1, a first communication device T1 (a tablet or a Smartphone or a mobile phone, etc.) is handled by a user so as to apply a movement which can be defined, for example:

- by an angle A2, with respect to a vertical direction, and/or

- by an angle A1, with respect to north direction (arrow N).

To that end, the device T1 comprises at least one gravity sensor GS to sense the angle A2 and one magnetic sensor MS to sense the angle A1. A movement can be thus defined by a combination of movements, such as a sequence of a first movement for placing the device T1 horizontally for example (or vertically in another example hereafter), followed by a movement for placing it in the north direction.

Referring to Figure 2, such a gesture applied to device T1 (step 10 of Figure 2) is interpreted by a processing unit which generates an identifier SSID of a wireless network which is then initiated by the device T1 (in this example, according to the IEEE 802.11 standard), as well as a password PWD which can be asked to other communication devices to enter the wireless network (step 11).

To that end, with reference to Figure 4, a movement sensing unit 40 (including the sensors MS and GS) can generate a user signal UE which is interpreted by a processing unit 41 (typically including a processor PROC and a memory MEM). For example, a code can be generated and interpreted as a wireless network identifier value. This value is then compared to allowed identifiers of a table stored in a memory of the device T1. If this value does not correspond to any reference of the table, the device T1 can display a message to the user asking the user for trying again a gesture and/or a movement. Otherwise, the identifier of the table which corresponds the most to the identifier value is selected and is assigned to the wireless network initiated by the device T1. A related password PWD can be calculated also on the basis of a signature function applied to the identifier, like explained in a detailed embodiment hereafter. Each device further comprises, of course, a communication interface 42 to send the network identifier SSID to other devices (for the device T1) or to send a connection request REQ to the network having that SSID (for the device T2), like explained in details hereafter.

Finally, in step 12 of Figure 2, a wireless local area network is then initiated and has an identifier (SSID) and a related password PWD.

Referring again to Figure 1, a second communication device T2 is handled by a user to communicate with device T1. To that end, the user applies a movement to device T2 which can be defined, for example:

- by a same angle A2, with respect to a vertical direction, and/or

- by a same angle A1, with respect to north direction (arrow N).

The device T2 has similar means for sensing that movement, including, for example, a gravity sensor GS and a magnetic sensor MS. The device T2 has also similar means, as drawn in Figure 4, to interpret such a movement as defining a wireless network identifier value SSID2 and a related password PWD2.

As a matter of fact, referring to Figure 2, such a gesture applied to device T2 (step 20 of Figure 2) causes the generation of an identifier value SSID2 and a password PWD2 (step 21). As usual, when a communication device needs to be connected to a wireless network, a list of identifiers SSID of accessible wireless networks surrounding that device is available (arrow "SSID" of Figure 1). According to an embodiment of the invention, a processing unit in device T2 verifies whether the identifier value SSID2 matches with one identifier of the list. If one identifier of the list is recognized (e.g. the identifier SSID which corresponds the most to the identifier value SSID2), a request to be connected to the wireless network having the recognized identifier SSID is sent (step 22). This request (arrow REQ of Figure 1) includes the password PWD2.

Therefore, if the identifier SSID of the wireless network initiated by the device T1 is recognized by the device T2, the device T1 receives the connection request from the device T2 and compares the password PWD2 to the password PWD related to the initiated wireless network (step 13 of Figure 1). As the gestures applied to devices T1 and T2 are here the same, the password PWD2 corresponds to the password PWD and the connection between devices T1 and T2 is established in step 14. However, if the gestures applied to devices T1 and T2 are not the same, the device T1 should not receive the connection request from the device T2, and, even if the device T1 receives a connection request from the device T2, the password PWD2 does not correspond to the right password PWD and the connection request is rejected in step 15.

More details and explanations are given now with reference to Figure 3.

In step 30 of Figure 3, a user (ALICE) of the device T1 makes a movement (an action and/or a gesture) using his device T1 (for example a circle in the space and/or pointing a direction). The user (BOB) of the device T2 just has to reproduce the same movement (action and/or gesture) to be connected with ALICE. More precisely, the sensors of the respective devices of ALICE and BOB analyse the movement and/or action and convert it into a code (step 31) which is introduced in a processing algorithm. The algorithm produces automatically an ID and a Password PWD (know by ALICE and BOB) by using data generated by the sensors.

For example, the mobile orientation can be "Stand-up" pointing the North at 30°. The processing unit generates in step 32:

- an SSID such as "MYSERVICE_NAME_STANDUP_NORTH"

- and a password PWD which can be a signature function of the SSID, such as a hash function:

$$PWD = HASH(North@30° + MYSERVICE\_SECRET)$$

More particularly, in an embodiment, a correspondence table is used in step 32 so as to place the angle values detected by the sensors within a particular range given by such a correspondence table. To each angle range (for example from 0 to 360° every 20° and from North to North every 20°) corresponds an SSID. That embodiment makes it possible to allow ranges of angle tolerance. However, other possible means can be used, for example a bijective function of the sensed angles can be applied to determine the SSID and an angle tolerance range "alpha" is provided so that the value "North@30°", for example, is admitted to correspond to an angle between North@30°-alpha and North@30°+alpha (with alpha=10° for example). The same can be carried out with the detection "stand-up" corresponding to an orientation of the device A2 for example in a range between -10° and +10°.

Moreover, a more sophisticated function of an orientation angle can be implemented to determine the SSID and/or the password. For example, the angle tolerance range can be narrowed according to the time spent since the wireless network was initiated. More generally, additional information can be used further to the movement applied to the device, to determine the SSID and/or the password. For example, a hash can be determined on the basis of the SSID and also upon an additional identifier previously sent (for example in an SMS message) by the device initiating the network to the device willing to be connected to the network.

In step 33, ALICE's device (T1) creates an access point (Hotspot Wifi, for example) with the network ID given above and security password PWD. BOB's device (T2) can be connected to ALICE's device using the same ID and same password, since BOB performs the same movement with his device so that the same angles A1, A2 are sensed (within a predetermined tolerance range).

The implementation of the present invention can be very useful also when device users of a community are willing to be interconnected (in a meeting for example). Then, ALICE can apply a movement to her device to initiate a wireless network and BOB, CHARLIE, and others, apply a same movement to their device so as to connect their device to that network.

The present invention offers many advantages, such as:

- an automatic connection without any knowledge of the identifier and password,

- no need to use a conventional user interface such as a keyboard and a screen,

- no need to scroll a list on a screen and select the right network identifier,

- no need to enter the password with a keyboard.

The number of operations usually needed to connect two devices is now divided by four or five.

Of course, the present invention is not limited to the description provided above as an example of embodiment; it encompasses possible variants.

For example, the invention can be implemented with other sensors, without any restriction to a motion of the device itself. For example, the use of the camera can be contemplated: the user can move his finger from top to down of the lens of the camera, for example, to generate a corresponding code.

In another example, a tactile screen can be used to determine a touch movement of a user on the device screen. For example, a sliding movement of the finger tip of the user, on the tactile screen, can draw a predetermined symbol (such as a square, or a circle, or a wave, etc., each shape defining a network identifier and password).

In a general way, it should understood that the invention encompasses any embodiment where a movement, a motion, a gesture, etc., other than simply inputting alphanumeric characters, is interpreted so as to assign a network identifier and a related password.

Moreover, the invention is not limited to an embodiment specifically related to a Wifi network connection. For example, it can be applied also to connect at least two devices through a Bluetooth communication link, or through any other kind of wireless communication link. It should be understood also that a password generation may not be necessary to carry out the invention, in cases where the involved kind of network does not require the use of a password.

Moreover, the invention can implemented either by ALICE's device for initiating a network or by BOB's device, alone, to be connected to a wireless network. For example, instructions to connect their device can be given to clients of a public Wifi hotspot (e.g. "point North with your device in an upright position"). Then, a local access point can verify the SSID and password generated by BOB's device (on the basis of a sensed movement applied by BOB to his device) and can provide accordingly an access to the wireless network.

**Claims**

1. A method for connecting at least a first communication device and a second communication device via a wireless link, the method comprising the steps performed in said first communication device:

   - initiating a local wireless network and activating a user interface to enter identification data related to said wireless network,
   - upon reception of a connection request from the second communication device, said communication request comprising identification data for using said network, checking a validity of the identification data received in the connection request by a comparison with said identification data related to the wireless network, and if the validity is checked, establishing a connection with the second communication device,
   wherein said user interface comprises at least one movement sensing unit, and,
   upon a movement performed by a user of said first communication device, the sensing unit generates a user signal,
   said user signal being interpreted and converted into said identification data related to said wireless network.

2. The method of claim 1, wherein said movement sensed by the sensing unit causes a generation of identification data comprising at least an identifier of said wireless network.

3. The method according to claim 2, wherein said generated identification data includes further a first password, and, the identification data comprised in said communication request including a second password, the validity checking step comprises a comparison between the first and second passwords.

4. The method according to claim 3, wherein said first password is calculated on the basis of a signature function of the identifier.

5. A method for connecting at least a first communication device to a second communication device via a wireless link, the method comprising the steps performed in said second communication device to enter a local wireless network initiated by the first communication device:

   - activating a user interface to enter identification data related to the local wireless network, and

- sending a connection request including said identification data to the first communication device to establish a connection with said first communication device,

wherein said user interface comprises at least one movement sensing unit, and,

upon a predetermined movement performed by a user of said second communication device, the sensing unit generates a user signal,

said user signal being interpreted and converted into said identification data related to said wireless network.

6. The method according to claim 5, wherein said predetermined movement sensed by the sensing unit causes a generation of identification data comprising at least an identifier value, said identifier value being compared to an identifier of the wireless network, and wherein said connection request is sent if the identifier value matches with the network identifier.

7. The method according to claim 6, wherein said generated identification data comprises further a password, said password being included in the communication request.

8. The method according to claim 7, wherein said password is calculated on the basis of a signature function of the identifier value.

9. A method according to anyone of claims 1 to 4, combined to anyone of claims 5 to 8, wherein, said first and second communication devices comprising similar movement sensing unit, said predetermined movement performed by a user of said second communication device to send said connection request corresponds to said movement performed by a user of said first communication device to initiate the network.

10. A method according to anyone of claims 2, 3, 4, 6, 7 and 8, wherein said wireless link is established according to the IEEE 802.11 standard, and wherein said identifier of the wireless network is a service set identifier (SSID).

11. The method according to any of the preceding claims, wherein the movement sensing unit of said first and/or second communication devices comprises a magnetic sensor to determine an orientation with respect to north, and wherein said predetermined movement corresponds to orienting said communication device within a predetermined orientation range with respect to north.

12. The method according to any of the preceding claims, wherein the movement sensing unit of said first and/or second communication devices comprises a gravity sensor to determine an inclination of the communication device with respect to a vertical direction, and wherein said predetermined movement corresponds to inclining said communication device within a predetermined angle range relatively to the vertical direction.

13. The method according to anyone of claims 11 and 12, wherein said predetermined movement corresponds to a predetermined combination of several movements.

14. A computer program product, comprising instructions for performing the method as claimed in any of the preceding claims, when run by a processor.

15. The computer program product of claim 14, comprising instructions for interpreting and converting the user signal into at least identification data related to the wireless network, and for comparing said identification data to a reference.

16. A communication device for performing a method according to anyone of claims 1 to 13, comprising at least:

- a movement sensing unit generating a user signal,
- a processing unit for interpreting and converting the user signal into at least identification data related to the wireless network, and for comparing said identification data to a reference, and
- a communication interface controlled by the checking unit for, in case of validity of said comparison, establishing a wireless connection with at least one other communication device and/or for sending a wireless connection request to another communication device.

FIG. 1

FIG. 2

T1

GEST — 10

Define SSID, PWD — 11

CREATE LAN — 12

COMP PWD — 13

KO

REJECT
15

OK

CONNECT — 14

T2

GEST — 20

Define SSID2, PW2 — 21

CONNECT REQ — 22

EP 2 736 230 A1

30        31              32            33

| Gesture / Mouvement | → | Sensors | Code → | Tables | | SSID, PWD |
|---|---|---|---|---|---|---|

## FIG. 3

40        41              42          SSID

| MS, GS | UE → | PROC, MEM | ID, PWD → | COM |
|---|---|---|---|---|

REQ

## FIG. 4

Europäisches
Patentamt

European
Patent Office

Office européen
des brevets

# EUROPEAN SEARCH REPORT

Application Number

EP 12 30 6455

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2007/211573 A1 (HERMANSSON JONAS G [SE]) 13 September 2007 (2007-09-13) | 1,2,5-7, 9,10, 13-16 | INV. H04M1/725 |
| Y | * paragraphs [0046], [0054], [0062] - [0069], [0076]; figures 1,7,10 * | 11,12 | |
| Y | US 2011/088002 A1 (FREER CARL JOHAN [US]) 14 April 2011 (2011-04-14) * paragraph [0023]; figure 1 * | 11,12 | |
| A | US 2010/167646 A1 (ALAMEH RACHID [US] ET AL) 1 July 2010 (2010-07-01) * paragraphs [0018], [0031] - [0033] * | 1,5 | |

TECHNICAL FIELDS
SEARCHED       (IPC)

H04M

The present search report has been drawn up for all claims

| Place of search | Date of completion of the search | Examiner |
|---|---|---|
| The Hague | 18 April 2013 | Amorotti, M |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 12 30 6455

This annex lists the patent family members relating to the patent documents cited in the above-mentioned European search report.
The members are as contained in the European Patent Office EDP file on
The European Patent Office is in no way liable for these particulars which are merely given for the purpose of information.

18-04-2013

| Patent document cited in search report | | Publication date | Patent family member(s) | | Publication date |
|---|---|---|---|---|---|
| US 2007211573 | A1 | 13-09-2007 | CN<br>US | 101401057 A<br>2007211573 A1 | 01-04-2009<br>13-09-2007 |
| US 2011088002 | A1 | 14-04-2011 | NONE | | |
| US 2010167646 | A1 | 01-07-2010 | CN<br>EP<br>KR<br>US<br>WO | 102273184 A<br>2374265 A1<br>20110091570 A<br>2010167646 A1<br>2010078094 A1 | 07-12-2011<br>12-10-2011<br>11-08-2011<br>01-07-2010<br>08-07-2010 |

EPO FORM P0459

For more details about this annex : see Official Journal of the European Patent Office, No. 12/82